# EUROPEAN PATENT APPLICATION

(11) **EP 4 831 732 A1**
(43) Date of publication of application: **28.10.2026**
(21) Application number: 26158442.9
(22) Date of filing: 13.02.2026
(51) Int. Cl.: G02F 1/29, G02B 3/14, G02C 7/08, G02F 1/1343, G02F 1/1335

(54) **TUNABLE LIQUID CRYSTAL LENSES, LENS ARRAYS, AND LENS SYSTEMS**

(30) Priority: 22.04.2025 US 202563792593 P; 28.08.2025 US 202519312961
(71) Applicant: II-VI Delaware, Inc., Wilmington, DE 19890 (US)
(72) Inventor: YUAN, Haijun, Wilmington, 19890 (US); YUAN, Haiji Jimmy, Wilmington, 19890 (US); WANG, Yajun, Wilmington, 19890 (US); WANG, Lixin, Wilmington, 19890 (US); LI, Qingyu, Wilmington, 19890 (US)
(74) Representative: Schmidt, Christian

(57) **Abstract**

A tunable lens includes an upper substrate, a lower substrate, and a gasket between the upper substrate and the lower substrate, which form a cell between the upper substrate and the lower substrate. The tunable lens further includes liquid crystal that fills the cell. The upper substrate includes an upper electrode and an upper transparent resistive film. The lower substrate includes a lower electrode and a lower transparent resistive film. In response to an applied drive signal, the upper and lower transparent resistive films develop a nonlinear electric field that passes through the cell and aligns molecules of the liquid crystal.

## Description

### CROSS-REFERENCE TO RELATED APPLICATIONS

The present application claims benefit of and priority to U.S. Provisional Application No. 63/792,593, filed April 22, 2025, the contents of which are hereby incorporated herein by reference in their entirety.

### TECHNICAL FIELD

Aspects of the present disclosure relate to lenses and lens arrays and more specifically to lenses and lens arrays used in optical switching systems.

### BACKGROUND

Temperature fluctuations and/or other varying environmental conditions may negatively affect performance of optical switching systems. Thus, optical switching systems may benefit from techniques that permit real-time tuning of optical characteristics so as to compensate for environmental changes.

Further limitations and disadvantages of conventional and traditional approaches will become apparent to one of skill in the art, through comparison of such approaches with some aspects of the present disclosure as set forth in the remainder of the present application with reference to the drawings.

### BRIEF SUMMARY OF THE DISCLOSURE

Shown in and/or described in connection with at least one of the figures, and set forth more completely in the claims, are lenses and lens arrays with adjustable focal power. In particular, focal power of such lenses and/or each lens of such lens arrays may be adjusted via electrical control and/or drive signals. In various embodiments, such adjustments to focal power may compensate for environmentally-induced changes to optical performance.

These and other advantages, aspects, and novel features of the present disclosure, as well as details of illustrated embodiments thereof, will be more fully understood from the following description and drawings.

### BRIEF DESCRIPTION OF THE DRAWINGS

Various features and advantages of the present disclosure may be more readily understood with reference to the following detailed description taken in conjunction with the accompanying drawings, wherein like reference numerals designate like structural elements.
FIG. 1 shows an embodiment of a lens system that provides elliptical focal power tuning for its lens which is depicted via a perspective view.
FIG. 2A shows the lens system of FIG. 1 in which the lens is depicted via a side view with positive nematic liquid crystal.
FIG. 2B depicts the lens system of FIG. 1 in which the lens is depicted via a side view with negative nematic liquid crystal.
FIG. 3 depicts an embodiment of a lens system that provides cylindrical focal power tuning for its lens.
FIG. 4 depicts an embodiment of a lens system that provides different focal power tuning for its lens in a first direction than in a second direction.
FIG. 5 depicts an embodiment of a lens system that provides spherical focal power tuning for its lens.
FIG. 6 depicts an example nonlinear electric field developed by the lens system of FIG. 1.
FIG. 7 depicts an embodiment of a lens system that provides focal power tuning for lenses of its lens array.

### DESCRIPTION

The figures illustrate a general manner of construction. Descriptions and details of well-known features and techniques may be omitted to avoid unnecessarily obscuring the present disclosure. In addition, elements in the drawing figures are not necessarily drawn to scale. For example, the dimensions of some of the elements in the figures may be exaggerated relative to other elements to help improve understanding of the examples discussed in the present disclosure. The same reference numerals in different figures denote the same elements.

The term "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

The terms "comprises," "comprising," "includes," and/or "including," are "open ended" terms and specify the presence of stated features, but do not preclude the presence or addition of one or more other features.

The terms "first," "second," *etc.* may be used herein to describe various elements, and these elements should not be limited by these terms. These terms are only used to distinguish one element from another. Thus, for example, a first element discussed in this disclosure could be termed a second element without departing from the teachings of the present disclosure.

The term "AC" is used herein in its broad sense to mean "alternating," regardless of whether a current, a voltage, or other property. For example, the term AC signal and similar terms may be used to describe a signal that may be either an alternating current signal or an alternating voltage signal.

Also, any numerical range recited herein is intended to include all sub-ranges subsumed therein. For example, a range of "1 to 10" is intended to include any and all sub-ranges between and including the recited minimum value of 1 and the recited maximum value of 10, that is, all sub-ranges beginning with a minimum value equal to or greater than 1 and ending with a maximum value equal to or less than 10, and all sub-ranges in-between, e.g., 1 to 6.3, or 5.5 to 10, or 2.7 to 6.1.

Aspects of the present disclosure are directed to lens systems in which focal power of a lens and/or one or more lenses of a lens array may be adjusted. In particular, a lens may include an upper substrate, a lower substrate, and a gasket between the upper substrate and the lower substrate to form a cell. Further, the cell of the lens may be filled with a liquid crystal. The upper substrate may include an upper electrode and an upper transparent resistive film. The lower substrate likewise may include a lower electrode and a lower transparent resistive film. In response to one or more AC drive signals, the upper transparent resistive film and the lower transparent resistive film may develop a nonlinear electric field through the cell with the help of distributed capacitance between the upper substrate and the lower substrate. The nonlinear electric field may align molecules of the liquid crystal in cell and adjust focal power of the lens. Thus, the focal power of the lens may be tuned via suitable application of one or more AC drive signals to the upper and lower electrodes.

Per various aspects of the present disclosure, the voltage difference between the upper transparent resistive film and the lower transparent resistive film may govern the orientation of the liquid crystal within the cell. Due to the resistance of these resistive films and the distributed capacitance between these resistive films, the developed voltage difference may exhibit a nonlinear spatial distribution. In particular, the higher the resistance of these resistive films, the steeper the voltage gradient, which may enhance the focusing power of the lens. Thus, the focusing strength of the lens may be further tuned by adjusting the voltage difference between the upper electrode and the lower electrode and the respective resistive films.

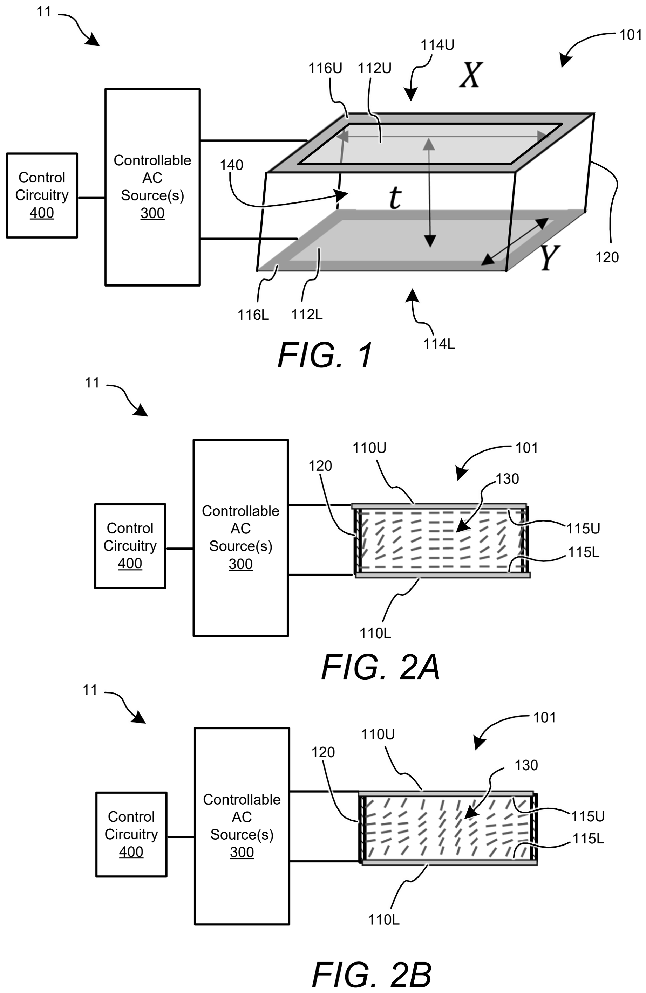

Referring now to FIGS. 1, 2A, and 2B, a lens system 11 is shown in accordance with various aspects of the present disclosure. As shown, the lens system 11 may include a lens 101, one or more controllable AC sources 300, and a controller 400. FIG. 1 provides a perspective view of the lens 101 of the lens system 11. FIGS. 2A and 2B each provide a side view of the lens 101. FIG. 2A shows the lens 101 with positive nematic liquid crystal. FIG. 2B shows the lens 101 with negative nematic liquid crystal.

The lens 101 may include an upper substrate 110U, a lower substrate 110L, a gasket 120, and liquid crystal 130 between the upper substrate 110U and the lower substrate 110L. The upper substrate 110U and the lower substrate 110L may be laminated or otherwise coupled together with the gasket 120 between a bottom side of the upper substrate 110U and a top side of the lower substrate 110L. In particular, the gasket 120 may maintain the upper substrate 110U parallel to the lower substrate 110L and may maintain a gap thickness t between the upper substrate 110U and the lower substrate 110L as shown in FIG. 1. Further, the gasket 120 may enclose or otherwise seal a volume of the liquid crystal 130 between the upper substrate 110U, the lower substrate 110L so as to define a cell 140.

In various embodiments, the liquid crystal 130 may fill the cell 140 defined by the upper substrate 110U, the lower substrate 110L, and the gasket 120. Further, molecules of the liquid crystal 130 may align based on an electric field that passes through the cell 140, thus providing an electronically controlled birefringence (ECB) cell.

To aid such alignment, a bottom side of the upper substrate 110U may be coated with an upper alignment layer 115U (e.g., a polymer layer such as a rubbed polyimide layer). See, e.g., FIG. 2A. Similarly, a top side of the lower substrate 110L may be coated with a lower alignment layer 115L *(e.g.,* a polymer layer such as a rubbed polyimide layer). Such alignment layers 115U, 115L may respectively cover the bottom side of the upper substrate 110U and the top side of the lower substrate 110L. Due to such covering, the alignment layers 115U, 115L may provide surface anchoring, which may aid in stabilizing alignment of molecules of the liquid crystal 130 in the cell 140.

A top side of the upper substrate 110U may include an upper transparent resistive film 112U. Further, an upper electrode 114U may be coupled to the upper transparent resistive film 112U. See, e.g., FIG. 1. Similarly, a bottom side of the lower substrate 110L may include a lower transparent resistive film 112L and a lower electrode 114L may be coupled to the lower transparent resistive film 112L.

In various embodiments, the upper transparent resistive film 112U may cover the top side of the upper substrate 110U and extend to perimeter sides or edges of the cell 140. In particular, the upper transparent resistive film 112U may be formed by uniformly coating the top side of the upper substrate 110U with transparent material that has a relatively high resistivity. In some embodiments, the upper transparent resistive film 112U may provide a resistance on the order of 1 megaohms (MΩ) or greater and may provide such resistance uniformly (e.g., resistance that varies by less than 5%, by less than 10%, or by less than 15%) between conductive traces 116U of the upper electrode 114U.

The upper electrode 114U may be coupled to the upper transparent resistive film 112U. In particular, the upper electrode 114U may be formed by applying a highly conductive material on a top side of the upper transparent resistive film 112U. In particular, upper conductive traces 116U of the upper electrode 114U may be formed along one or more perimeter sides or edges of the cell 140 as shown in FIG. 1. In some embodiments, each conductive trace 116U may provide a resistance on the order of 1 kiloohm (kΩ) or less. To this end, each conductive trace 116U of the upper electrode 114U may comprise one or more chrome layers, one or more copper layers, one or more gold layers, one or more low resistivity indium tin oxide (ITO) layer, and/or one or more other low resistivity material layers. Thus, each conductive trace 116U may provide a lower resistance than the resistance provided by the upper transparent resistive film 112U. As such, unlike the upper transparent resistive film 112U, the upper electrode 114U may develop a uniform electric potential along its conductive traces 116U when driven by the one or more AC drive signals received from the controllable AC sources 300.

Similarly, the lower transparent resistive film 112L may cover the bottom side of the lower substrate 110L and extend to perimeter sides or edges of the cell 140. In particular, the lower transparent resistive film 112L may be formed by uniformly coating the bottom side of the lower substrate 110L with a transparent material that has a relatively high resistivity. Similar to the upper transparent resistive film 112L, the lower transparent resistive film 112L may provide a resistance on the order of 1 megaohm (MΩ) or greater and may provide such resistance uniformly between conductive traces 116L of the lower electrode 114L.

The lower electrode 114L may be coupled to the lower transparent resistive film 112L. In particular, the lower electrode 114L may be formed by applying a highly conductive material on a bottom side of the lower transparent resistive film 112L. In particular, lower conductive traces 116L of the lower electrode 114L may be formed along one or more perimeter sides or edges of the cell 140 as shown in FIG. 1. In some embodiments, each lower conductive trace 116L may provide a resistance on the order of 1 kiloohms (kΩ) or less. To this end, each lower conductive trace 116U may comprise one or more chrome layers, one or more copper layers, one or more gold layers, one or more low resistivity Indium Tin Oxide (ITO) layers, and/or one or more other low resistivity material layers. Thus, each lower conductive trace 116L may provide a lower resistance than the resistance provided by the lower transparent resistive film 112L. As such, unlike the lower transparent resistive film 112L, the lower electrode 114L may develop a uniform electric potential along the lower conductive traces 116L when driven by the one or more AC drive signals received from the controllable AC sources 300.

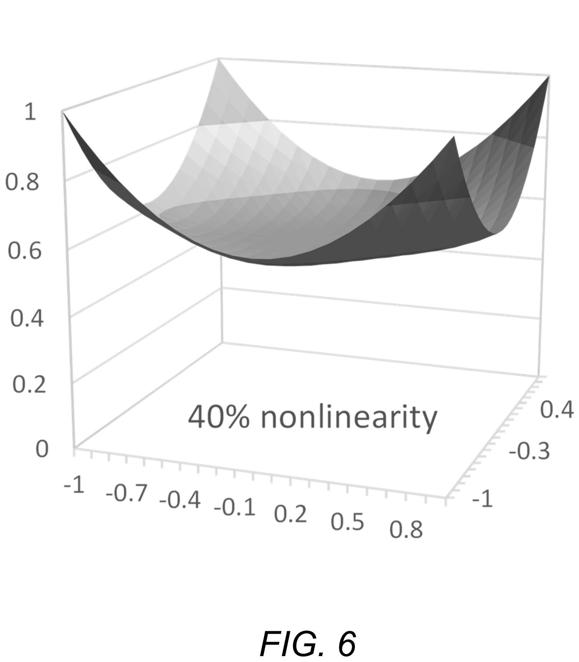

The upper electrode 114U and the lower electrode 114L may be electrically coupled to the one or more controllable AC sources 300 so as to apply one or more AC drive signals to the upper transparent resistive film 112U and the lower transparent resistive film 112L. Such application of the one or more AC drive signals may cause the upper transparent resistive film 112U and the lower transparent resistive film 112L to develop an electric field that passes vertically through the cell 140 and the liquid crystal 130 therein. In particular, the upper transparent resistive film 112U and the lower transparent resistive film 112L may develop the electric field such that the electric field is distributed across an XY plane in a nonlinear manner as shown in FIG. 6. Such nonlinear distribution of the electric field may cause the molecules of the liquid crystal 130 to align in a nonlinear manner across the XY plane. In particular, the angle of each liquid crystal molecule may vary along the XY plane so as to align based on the applied nonlinear electric field. See, e.g., FIGS. 2A and 2B

In various embodiments, the liquid crystal 130 used to fill the cell 140 may comprise a positive nematic liquid crystal as shown in FIG. 2A. In other embodiments, the liquid crystal 130 used to fill the cell 140 may comprise a negative nematic liquid crystal as shown in FIG. 2B.

As shown in FIG. 1, FIG. 3, FIG. 4 and FIG. 5, the arrangement of the upper conductive traces 116U and the lower conductive traces 116L may be adjusted to provide a lens 101, 103, 104, 105 with different tuning capabilities. For example, FIG. 1 depicts an embodiment of a lens system 11 in which the upper transparent resistive film 112U and upper electrode 114U define a quadrilateral top of the cell 140 and the lower transparent resistive film 112L and lower electrode 114L define a quadrilateral bottom of the cell 140. Further, the upper conductive traces 116U may be coupled to the upper transparent resistive film 112U along four perimeter sides of the cell 140 so as to enclose or bound each side of the quadrilateral top of the cell 140. Similarly, the lower conductive traces 116L may be coupled to the lower transparent resistive film 112L along four perimeter sides of the cell 140 so as to enclose or bound each side of the quadrilateral bottom of the cell 140.

Thus, the upper electrode 114U and the lower electrode 114L of FIGS. 1, 2A, and 2B may circumscribe or surround the top and bottom of the cell 140. Due to such an arrangement of the upper electrode 114U and the lower electrode 114L, AC drive signals applied to the upper transparent resistive film 112U and the lower transparent resistive film 112L via the upper electrode 114U and the lower electrode 114L may develop an electric field that provides the lens 101 with elliptical focal tuning.

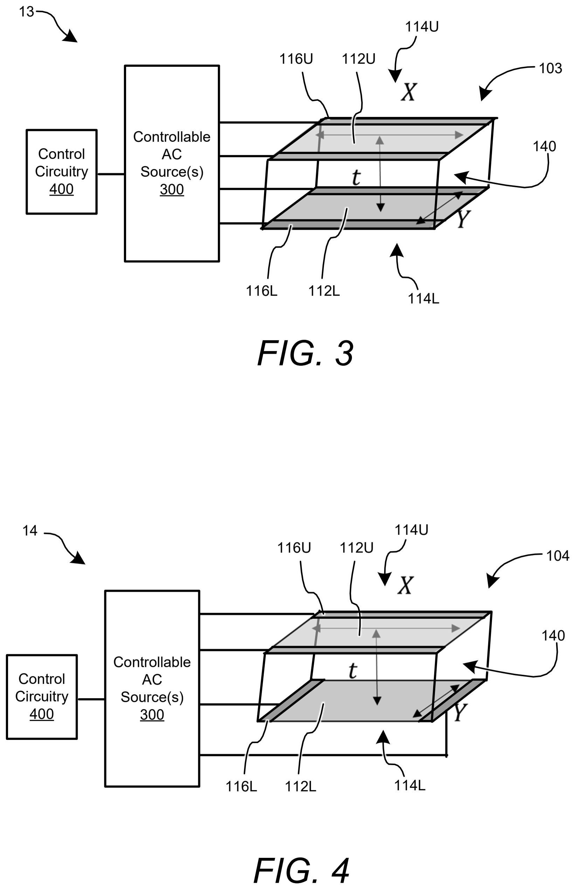

FIG. 3 depicts an embodiment of a lens system 13 in which the upper transparent resistive film 112U and the upper electrode 114U define a quadrilateral top of the cell 140 and the lower transparent resistive film 112L and the lower electrode 114L define a quadrilateral bottom of the cell 140. Further, the upper conductive traces 116U and the lower conductive traces 116L may partially enclose or bound the quadrilateral top and the quadrilateral bottom of the cell 140. In particular, the upper conductive traces 116U may be coupled to the upper transparent resistive film 112U long opposite sides of the quadrilateral top of the cell 140. For example, the upper conductive traces 116U may extend in a horizontal or first direction (e.g., in the depicted X direction) along opposite perimeter sides so as to bound the quadrilateral top side of the cell 140 in a vertical or second direction *(e.g.,* in the depicted Y direction).

Similarly, the lower conductive traces 116L may be coupled to the lower transparent resistive film 112L along opposite sides of the quadrilateral bottom of the cell 140. In particular, the lower conductive traces 116L may be coupled to the same sides of the cell 140 as the upper conductive traces 116U. For example, the lower conductive traces 116L may extend in a horizontal or first direction (*e.g*., in the depicted X direction) along opposite perimeter sides so as to bound the quadrilateral bottom side of the cell 140 in a vertical or second direction (*e.g*., in the depicted Y direction).

Thus, the upper electrode 114U and the lower electrode 114L of FIG. 3 may partially circumscribe or surround the top and bottom of the cell 140 along the same sides. Due to such arrangement of the upper electrode 114U and the lower electrode 114L, AC drive signals applied to the upper transparent resistive film 112U and the lower transparent resistive film 112L via the upper electrode 114U and the lower electrode 114L may develop an electric field that provides the lens 103 with cylindrical focal power tuning.

FIG. 4 depicts an embodiment of a lens system 14 in which the upper transparent resistive film 112U and upper electrode 114U define a quadrilateral top of the cell 140 and the lower transparent resistive film 112L and the lower electrode 114L define a quadrilateral bottom of the cell 140. Further, the upper conductive traces 116U and the lower conductive traces 116L may partially enclose or bound the quadrilateral top and the quadrilateral bottom of the cell 140. In particular, the upper conductive traces 116U may be coupled to the upper transparent resistive film 112U long opposite sides of the quadrilateral top of the cell 140. For example, the upper conductive traces 116U may extend in a horizontal or first direction (*e.g*., in the depicted X direction) along opposite perimeter sides so as to bound the quadrilateral top side of the cell 140 in a vertical or second direction (*e.g.,* in the depicted Y direction).

Similarly, the lower conductive traces 116L may be coupled to the lower transparent resistive film 112L along opposite sides of the quadrilateral bottom of the cell 140. In particular, the lower conductive traces 116L may be coupled to the different sides of the cell 140 than the upper conductive traces 116U. For example, the lower conductive traces 116L may extend in a vertical or second direction (*e.g.,* in the depicted Y direction) along opposite perimeter sides so as to bound the quadrilateral bottom side of the cell 140 in a horizontal or first direction (*e.g.,* in the depicted X direction).

Thus, the upper electrode 114U and the lower electrode 114L of FIG. 4 may each partially circumscribe or surround different portions of the top and bottom of the cell 140. Due to such arrangement of the upper electrode 114U and the lower electrode 114L, AC drive signals applied to the upper transparent resistive film 112U and the lower transparent resistive film 112L via the upper electrode 114U and the lower electrode 114L may develop an electric field that provides the lens 104 with different focal power tuning in a horizontal or first direction than the focal power turning provided in a vertical or second direction.

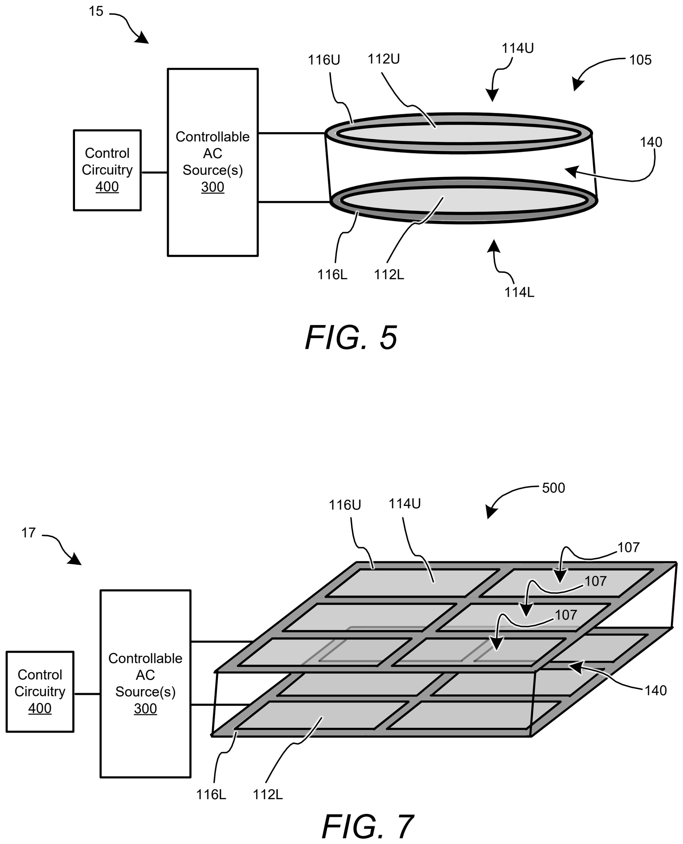

FIG. 5 depicts yet another embodiment of a lens system 15 in which the upper transparent resistive film 112U and the upper electrode 114U define a circular top of the cell 140 and the lower transparent resistive film 112L and the lower electrode 114L define a circular bottom of the cell 140. Further, the upper conductive traces 116U and the lower conductive traces 116L may enclose or bound the circular top and the circular bottom of the cell 140. In particular, the upper conductive traces 116U may be coupled to the upper transparent resistive film 112U along a circumference or perimeter of the circular top of the cell 140. Similarly, the lower conductive traces 116L may be coupled to the lower transparent resistive film 112L along a circumference or perimeter of the circular bottom of the cell 140.

Thus, the upper electrode 114U and the lower electrode 114L of FIG. 5 may circumscribe or surround the top and bottom of the cell 140. Due to such arrangement of the upper electrode 114U and the lower electrode 114L, AC drive signals applied to the upper transparent resistive film 112U and the lower transparent resistive film 112L via the upper electrode 114U and the lower electrode 114L may develop an electric field that provides the lens 105 with spherical focal power tuning.

The different arrangements of the transparent resistive films 112U, 112L and conductive traces 116U, 116L shown in FIGS. 1, 3, 4, and 5 may provide each lens 101, 103, 104, 105 with different focal power tuning. As noted above, the transparent resistive films 112U, 112L and the conductive traces 116U, 116L of FIG. 1 may develop electric fields that provide the lens 101 with elliptical focal power tuning. The transparent resistive films 112U, 112L and the conductive traces 116U, 116L of FIG. 3 may develop electric fields that provide the lens 103 with cylindrical focal power tuning. The transparent resistive films 112U, 112L and the conductive traces 116U, 116L of FIG. 4 may develop electric fields that provide the lens 104 with different focal power tuning in the horizontal and vertical directions. The transparent resistive films 112U, 112L and the conductive traces 116U, 116L of FIG. 5 may develop electric fields that provide the lens 105 with spherical focal power tuning.

The upper transparent resistive film 112U and the lower transparent resistive film 112L effectively form a capacitor in which the upper transparent resistive film 112U and the lower transparent resistive film 112L provide a capacitance that is dependent on the dielectric constant of the liquid crystal 130 and the dimensions of the cell 140. When the one or more controllable AC sources 300 apply one or more AC drive signals to the upper transparent resistive film 112U and the lower transparent resistive film 112U via upper electrode 114U and lower electrode 114L, the upper transparent resistive film 112U and the lower transparent resistive film 112L may each develop a voltage that varies gradually along its respective substrate 110U, 110L, which creates a nonlinear electrical field that passes through the cell 140. The degree of such nonlinearity of the electrical field depends on the conductivity of the transparent resistive films 112U, 112L and the capacitance of the cell 140. In general, the nonlinearity of the electrical field increases as resistance of the transparent resistive films 112U, 112L increases. See, e.g., FIG. 6 which depicts the nonlinear nature of the developed electric field for an embodiments of the lens 101 shown in FIG. 1.

Referring now to FIG. 7, an embodiment of a lens system 17 that includes a lens array 500 is shown. The lens array 500 may include a plurality of lenses 107. In general, each lens 107 of the lens array 500 may be implemented in a manner similar to one or more of the lenses 101, 103, 104, 105 shown in FIGS. 1, 3, 4, and 5. In various embodiments, each lens 101, 103, 104, 105 may share an upper substrate 110U and a lower substrate 110L. For example, the upper substrate 110U and the lower substrate 110L may comprise a glass plate or other transparent substrate in which a gasket 120 between the upper substrate 110U and the lower substrate 110L defines an array of cells 140 filled with liquid crystal 130. In various embodiments, the gasket 120 may define a separate cell 140 for each lens 107. In other embodiments, the gasket 120 may define cells 140 that span one or more lenses 107. In such embodiments, a group of lenses 107 may share a single cell 140.

Further, conductive traces 116U, 116L may be formed on the upper substrate 110U and lower substrate 110L such that one or more AC sources 300 may apply separate AC drive signals to each lens 107. In this manner, the controller or other circuitry 400 may individually control the focal power provided by each lens 107.

In some embodiments, each lens 107 may have a same lens configuration. For example, each lens 107 may be implemented per the lens 101, 103, 104, 105 of FIGS. 1, 3, 4, or 5. In other embodiments, one or more lenses 107 of the lens array 500 may be implemented with a different lens configuration. For example, a first subset of the lenses 107 may be implemented in a manner similar to the lens 101 of FIG. 1, a second subset of the lenses 107 may be implemented in a manner similar to the lens 103 of FIG. 3, a third subset of the lenses 107 may be implemented in a manner similar to the lens 104 of FIG. 4, and/or a fourth subset of the lenses 107 may be implemented in a manner similar to the lens 105 of FIG. 5. Thus, not only may the controller and/or other circuitry 400 individually control the focal power provided each individual lens 107, the lens array 500 may provide lenses 107 of different configurations in order to provide different focusing capabilities to each lens 107 in the lens array 107.

A controller and/or other circuitry 400 of the lens systems 11, 13, 14, 15, and 17 shown in FIGS. 1, 3, 4, 5, and 7 may generate one or more control signals that causes the one or more controllable AC sources 300 to adjust one or more AC drive signals applied to a lens 101, 103, 104, 105, 107. Via such control signals, the controller and/or other circuitry 400 may adjust the nonlinear distribution of the electric field developed by each lens 101, 103, 104, 105, 107 to create a nonlinear distributed phase shift of birefringent properties of the liquid crystal 130. Such shift of the liquid crystal 130 may focus a beam (*e.g*., a polarized laser beam) passing through the transparent resistive films 112U, 112L and the liquid crystal 130 of the cell 140. By adjusting the one or more AC drive signals applied to each lens 101, 103, 104, 105, 107, the controller and/or other circuitry 400 may adjust the focus power of the lens 101, 103, 104, 105, 107, which may compensate for environment-induced effects.

This disclosure may relate to the following implementations: A tunable lens includes an upper substrate, a lower substrate, and a gasket between the upper substrate and the lower substrate, which form a cell between the upper substrate and the lower substrate. The tunable lens further includes liquid crystal that fills the cell. The upper substrate includes an upper electrode and an upper transparent resistive film. The lower substrate includes a lower electrode and a lower transparent resistive film. In response to an applied drive signal, the upper and lower transparent resistive films develop a nonlinear electric field that passes through the cell and aligns molecules of the liquid crystal.

The present application claims priority of US patent application 63/792,593 filed on April 22, 2025, and of US patent application 19/312,961 filed on August 28, 2025. The entire disclosure content of these applications is hereby incorporated herein by reference for all purposes.

In the following, a set of items is disclosed. The items are numbered to facilitate referencing the features of one item in other items. The items form part of the present disclosure and could be made subject to independent and/or dependent claims irrespective of what currently is claimed in the application. We note, however, that the scope of protection is defined by the appended claims, where the following items do not constitute claims. The items are:
1. A lens, comprising:
   an upper substrate comprising an upper electrode;
   a lower substrate comprising a lower electrode;
   a gasket between the upper substrate and the lower substrate, wherein the upper substrate, the lower substrate, and the gasket define a cell; and
   liquid crystal in the cell; and
   wherein, in response to one or more drive signals, the upper electrode and the lower electrode develop a nonlinear electric field that passes through the cell and causes molecules of the liquid crystal to align based on the nonlinear electric field.
2. The lens of item 1, wherein:
   the upper electrode comprises an upper resistive film and one or more upper conductive traces coupled to the upper resistive film; and
   the lower electrode comprises a lower resistive film and one or more lower conductive traces coupled to the lower resistive film.
3. The lens of item 2, wherein:
   the one or more upper conductive traces are configured to receive a first drive signal of the one or more drive signals and apply the first drive signal to the upper resistive film; and
   the one or more lower conductive traces are configured to receive a second drive signal of the one or more drive signals and apply the second drive signal to the lower resistive film.
4. The lens of item 3, wherein the first drive signal and the second drive signal cause the upper resistive film and the lower resistive film to develop the nonlinear electric field that passes through the cell.
5. The lens of item 2, wherein:
   the upper resistive film extends to an upper perimeter of the cell;
   the one or more upper conductive traces are coupled to the upper resistive film along the upper perimeter of the cell;
   the lower resistive film extends to a lower perimeter of the cell; and
   the one or more lower conductive traces are coupled to the lower resistive film along the lower perimeter of the cell.
6. The lens of item 5, wherein:
   the one or more upper conductive traces circumscribe the upper perimeter of the cell; and
   the one or more lower conductive traces circumscribe the lower perimeter of the cell.
7. The lens of item 5, wherein:
   the one or more upper conductive traces partially circumscribe the upper perimeter of the cell; and
   the one or more lower conductive traces partially circumscribe the lower perimeter of the cell.
8. The lens of item 5, wherein:
   the upper perimeter of the cell comprises a plurality of upper perimeter sides;
   the lower perimeter of the cell comprises a plurality of lower perimeter sides;
   the one or more upper conductive traces extend along the plurality of upper perimeter sides; and
   the one or more lower conductive traces extend along the plurality of lower perimeter sides.
9. The lens of item 5, wherein:
   the upper perimeter comprises a plurality of upper first perimeter sides and a plurality of upper second perimeter sides;
   the lower perimeter comprises a plurality of lower first perimeter sides corresponding to the plurality of upper first perimeter sides and a plurality of lower second perimeter sides corresponding to the upper second perimeter sides;
   the one or more upper conductive traces extend along the upper first perimeter sides but do not extend along the upper second perimeter sides; and
   the one or more lower conductive traces extend along the lower second perimeter sides but do not extend along the lower first perimeter sides.
10. The lens of item 2, comprising:
   an upper alignment layer that covers an upper substrate bottom side; and
   a lower alignment layer that covers a lower substrate top side.
11. A lens, comprising:
   an upper substrate comprising an upper electrode;
   a lower substrate comprising a lower electrode;
   a gasket between the upper substrate and the lower substrate, wherein the upper substrate, the lower substrate, and the gasket define a cell between the upper substrate and the lower substrate; and
   liquid crystal in the cell; and
   wherein the upper electrode and the lower electrode are configured to change focal power of the lens by inducing changes in the liquid crystal.
12. The lens of item 11, wherein:
   the upper electrode comprises an upper resistive film that covers an upper substrate top side and one or more upper conductive traces coupled to the upper resistive film; and
   the lower electrode comprises a lower resistive film that covers a lower substrate bottom side and one or more lower conductive traces coupled to the lower resistive film.
13. The lens of item 12, wherein:
   the one or more upper conductive traces are configured to receive a first drive signal and to apply the first drive signal to the upper resistive film; and
   the one or more lower conductive traces are configured to receive a second drive signal and to apply the second drive signal to the lower resistive film.
14. The lens of item 13, wherein the upper resistive film and the lower resistive film are configured to develop, in response to the first drive signal and the second drive signal, a nonlinear electric field that effects alignment of the liquid crystal.
15. The lens of item 12, comprising:
   an upper alignment layer that covers an upper substrate bottom side; and
   a lower alignment layer that covers a lower substrate top side.
16. A lens system, comprising:
   a controller configured to generate one or more control signals;
   one or more AC sources configured to generate one or more drive signals in response to the one or more control signals;
   a lens array comprising an upper substrate, a lower substrate, and liquid crystal between the upper substrate and the lower substrate;
   wherein the upper substrate comprises an upper resistive layer and a plurality of upper conductive traces coupled to the upper resistive layer;
   wherein the lower substrate comprises a lower resistive layer and a plurality of lower conductive traces coupled to the lower resistive layer;
   wherein the plurality of upper conductive traces and the plurality of lower conductive traces define boundaries between adjacent lenses of the lens array; and
   wherein the one or more drive signals cause the plurality of upper conductive traces, the plurality of lower conductive traces, the upper resistive layer, and the lower resistive layer to develop electric fields that pass through the liquid crystal and change focal power of respective lenses.
17. The lens system of item 16, comprising:
   a gasket between the upper substrate and the lower substrate; and
   wherein the upper substrate, the lower substrate, and the gasket define a plurality of cells; and
   wherein the liquid crystal fills the plurality of cells.
18. The lens system of item 17, wherein the plurality of cells includes a separate cell for each lens of the lens array.
19. The lens system of item 17, wherein each cell of the plurality of cells spans multiple lens of the lens array.
20. The lens system of item 16, comprising:
   an upper alignment layer that covers an upper substrate bottom side; and
   a lower alignment layer that covers a lower substrate top side.

The present disclosure includes reference to certain examples, however, it will be understood by those skilled in the art that various changes may be made and equivalents may be substituted without departing from the scope of the disclosure. In addition, modifications may be made to the disclosed examples without departing from the scope of the present disclosure. Therefore, it is intended that the present disclosure not be limited to the examples disclosed, but that the disclosure will include all examples falling within the scope of the appended claims.

## Claims

1. A lens, comprising:
an upper substrate comprising an upper electrode;
a lower substrate comprising a lower electrode;
a gasket between the upper substrate and the lower substrate, wherein the upper substrate, the lower substrate, and the gasket define a cell; and
liquid crystal in the cell; and
wherein, in response to one or more drive signals, the upper electrode and the lower electrode develop a nonlinear electric field that passes through the cell and causes molecules of the liquid crystal to align based on the nonlinear electric field.

2. The lens of claim 1, wherein:
the upper electrode comprises an upper resistive film and one or more upper conductive traces coupled to the upper resistive film; and
the lower electrode comprises a lower resistive film and one or more lower conductive traces coupled to the lower resistive film.

3. The lens of claim 2, wherein:
the one or more upper conductive traces are configured to receive a first drive signal of the one or more drive signals and apply the first drive signal to the upper resistive film; and
the one or more lower conductive traces are configured to receive a second drive signal of the one or more drive signals and apply the second drive signal to the lower resistive film.

4. The lens of claim 3, wherein the first drive signal and the second drive signal cause the upper resistive film and the lower resistive film to develop the nonlinear electric field that passes through the cell.

5. The lens of any one of claims 2 to 4, wherein:
the upper resistive film extends to an upper perimeter of the cell;
the one or more upper conductive traces are coupled to the upper resistive film along the upper perimeter of the cell;
the lower resistive film extends to a lower perimeter of the cell; and
the one or more lower conductive traces are coupled to the lower resistive film along the lower perimeter of the cell.

6. The lens of claim 5, wherein:
the one or more upper conductive traces circumscribe the upper perimeter of the cell; and
the one or more lower conductive traces circumscribe the lower perimeter of the cell.

7. The lens of claim 5, wherein:
the one or more upper conductive traces partially circumscribe the upper perimeter of the cell; and
the one or more lower conductive traces partially circumscribe the lower perimeter of the cell.

8. The lens of any one of claims 5 to 7, wherein:
the upper perimeter of the cell comprises a plurality of upper perimeter sides;
the lower perimeter of the cell comprises a plurality of lower perimeter sides;
the one or more upper conductive traces extend along the plurality of upper perimeter sides; and
the one or more lower conductive traces extend along the plurality of lower perimeter sides.

9. The lens of claim 5 or 7, wherein:
the upper perimeter comprises a plurality of upper first perimeter sides and a plurality of upper second perimeter sides;
the lower perimeter comprises a plurality of lower first perimeter sides corresponding to the plurality of upper first perimeter sides and a plurality of lower second perimeter sides corresponding to the upper second perimeter sides;
the one or more upper conductive traces extend along the upper first perimeter sides but do not extend along the upper second perimeter sides; and
the one or more lower conductive traces extend along the lower second perimeter sides but do not extend along the lower first perimeter sides.

10. The lens of any one of claims 2 to 9, comprising:
an upper alignment layer that covers an upper substrate bottom side; and
a lower alignment layer that covers a lower substrate top side.

11. A lens, comprising:
an upper substrate comprising an upper electrode;
a lower substrate comprising a lower electrode;
a gasket between the upper substrate and the lower substrate, wherein the upper substrate, the lower substrate, and the gasket define a cell between the upper substrate and the lower substrate; and
liquid crystal in the cell; and
wherein the upper electrode and the lower electrode are configured to change focal power of the lens by inducing changes in the liquid crystal.

12. The lens of claim 11, wherein:
the upper electrode comprises an upper resistive film that covers an upper substrate top side and one or more upper conductive traces coupled to the upper resistive film; and
the lower electrode comprises a lower resistive film that covers a lower substrate bottom side and one or more lower conductive traces coupled to the lower resistive film,
a) optionally wherein the one or more upper conductive traces are configured to receive a first drive signal and to apply the first drive signal to the upper resistive film; and
the one or more lower conductive traces are configured to receive a second drive signal and to apply the second drive signal to the lower resistive film, wherein, for example, the upper resistive film and the lower resistive film are configured to develop, in response to the first drive signal and the second drive signal, a nonlinear electric field that effects alignment of the liquid crystal, and/or
b) the lens optionally comprising an upper alignment layer that covers an upper substrate bottom side; and
a lower alignment layer that covers a lower substrate top side.

13. A lens system, comprising:
a controller configured to generate one or more control signals;
one or more AC sources configured to generate one or more drive signals in response to the one or more control signals;
a lens array comprising an upper substrate, a lower substrate, and liquid crystal between the upper substrate and the lower substrate;
wherein the upper substrate comprises an upper resistive layer and a plurality of upper conductive traces coupled to the upper resistive layer;
wherein the lower substrate comprises a lower resistive layer and a plurality of lower conductive traces coupled to the lower resistive layer;
wherein the plurality of upper conductive traces and the plurality of lower conductive traces define boundaries between adjacent lenses of the lens array; and
wherein the one or more drive signals cause the plurality of upper conductive traces, the plurality of lower conductive traces, the upper resistive layer, and the lower resistive layer to develop electric fields that pass through the liquid crystal and change focal power of respective lenses.

14. The lens system of claim 13, comprising:
a gasket between the upper substrate and the lower substrate; and
wherein the upper substrate, the lower substrate, and the gasket define a plurality of cells; and
wherein the liquid crystal fills the plurality of cells,
a) optionally wherein the plurality of cells includes a separate cell for each lens of the lens array, and/or
b) optionally wherein each cell of the plurality of cells spans multiple lens of the lens array.

15. The lens system of claim 13 or 14, comprising:
an upper alignment layer that covers an upper substrate bottom side; and
a lower alignment layer that covers a lower substrate top side.
